# EUROPÄISCHE PATENTSCHRIFT

(11) **EP 2 060 412 B1**
(45) Veröffentlichungstag und Bekanntmachung des Hinweises auf die Patenterteilung: **10.04.2013**
(21) Anmeldenummer: 08165886.6
(22) Anmeldetag: 06.10.2008
(51) Int. Cl.: B60C 9/26

(54) **Fahrzeugluftreifen**
Pneumatic tyres for a vehicle
Pneus de véhicule

(30) Priorität: 15.11.2007 DE 102007054534
(43) Veröffentlichungstag der Anmeldung: 20.05.2009
(73) Patentinhaber: Continental Reifen Deutschland GmbH, 30165 Hannover (DE)
(72) Erfinder: Fidan, Mehmet Sadettin, 30827 Garbsen (DE)
(74) Vertreter: Finger, Karsten

(56) Entgegenhaltungen:
- EP-A- 0 162 687
- EP-A- 1 886 842
- DE-A1- 2 735 881
- US-A1- 2008 115 873

## Beschreibung

Die Erfindung betrifft einen Fahrzeugluftreifen in Radialbauart, insbesondere für Schwerlastfahrzeuge, mit einem mindestens dreilagigen Gürtelverband, welcher gummierte Festigkeitsträger aus Stahlkord oder einem Material vergleichbar hoher Steifigkeit und Festigkeit enthält und eine radial äußere und eine radial innere Gürtellage mit wenigstens einer zwischen diesen beiden Lagen angeordneten weiteren Lage aufweist, wobei die Festigkeitsträger der radial äußeren und der radial inneren Lage in jeder Lage parallel zueinander angeordnet sind und einen Winkel von mindestens 10° mit der Reifenumfangsrichtung einschließen und wobei die Festigkeitsträger der radial äußeren Lage und der radial inneren Lage eine gegenläufige Steigung aufweisen, wobei die radial äußere und die radial innere Lage aus einem oder mehreren gummierten Festigkeitsträgerstreifen spiralförmig um die mittige(n) Lage(n) herum in Umfangsrichtung gewickelt ist, so dass die radial äußere und die radial innere Lage keine axial äußeren freien Kanten aufweisen und die mittige(n) Lage(n) umhüllen.

Ein derartiger Fahrzeugluftreifen ist aus der DE 27 35 881 A1 und aus der EP-A-0 162 687 bekannt geworden. Zur Vermeidung einer Gürtelkantenseparation ist der Schnittkantengürtel von einer spiralförmig gewickelten, schlauchähnlichen Konstruktion umhüllt. Die Festigkeitsträger der schlauchähnlichen Umhüllung weisen gleiche Steigungswinkel zur Reifenumfangsrichtung auf.

Denn problematisch sind die axial äußeren Kantenbereiche der Gürtellagen, an denen es insbesondere durch die dort endenden freien Festigkeitsträgerenden einer Lage zu einer sogenannten Gürtelkantenseparation kommen kann. Gürtelkantenseparation bedeutet, dass sich die Kanten der Gürtellagen, insbesondere durch die scharfen freien Enden der Festigkeitsträger begünstigt, im Fahrbetrieb vom festen Vulkanisationsverband lösen und es zu einer Rissbildung in diesem Bereich kommt, wodurch die Haltbarkeit des Reifens vermindert werden kann.

Eine übliche Gürtelkonstruktionen für LKW-Reifen weist typischerweise drei oder vier Gürtellagen auf. Die Stahlkorde in der ersten Gürtellage schließen mit der Umfangsrichtung des Reifens einen Winkel ein, welcher zwischen 45° und 65° beträgt, die Stahlkorde in der zweiten Gürtellage, einer sogenannten Arbeitslage, schließen einen Winkel in der Größenordnung von 10° bis 30° mit der Umfangsrichtung ein und sind gleichsteigend zu den Stahlkorden in der ersten Gürtellage angeordnet. Die Stahlkorde in der dritten Gürtellage, der zweiten Arbeitslage, schließen einen Winkel von 10° bis 30° mit der Reifenumfangsrichtung ein und sind zu den Stahlkorden in der zweiten Gürtellage gekreuzt angeordnet. In der optionalen vierten Gürtellage, schließen die Stahlkorde mit der Reifenumfangsrichtung einen Winkel zwischen 10° und 30° ein, wobei die Stahlkorde entweder gleichsteigend oder gekreuzt zu den Stahlkorden in der dritten Gürtellage angeordnet sind.

Es ist auch bekannt, in einem mehrlagigen, insbesondere drei- bis fünflagigen Gürtel für LKW-Reifen, zumindest eine Gürtellage vorzusehen, bei der die Stahlkorde in Reifenumfangsrichtung oder unter einem sehr kleinen Winkel, jedenfalls kleiner als 5°, zur Reifenumfangsrichtung verlaufen. Diese 0°-Lage(n) im Gürtelverband von LKW-Reifen versteift bzw. versteifen den Reifen in Umfangsrichtung und haben günstige Auswirkungen auf das Abriebs- und Fahrverhalten des Reifens.

Es ist die Aufgabe der Erfindung, einen im Fahrverhalten verbesserten Fahrzeugluftreifen mit einem Gürtelverband bereitzustellen, der weniger anfällig für Gürtelkantenseparationen ist und somit die Haltbarkeit des diesen Gürtel enthaltenen Fahrzeugreifens verbessert ist.

Die Aufgabe wird gelöst, indem der Steigungswinkel der radial äußeren und der radial inneren Lage ungleich groß ist.

Erfindungswesentlich ist, dass ein Fahrzeugluftreifen mit einem asymmetrischen Gürtel bereitgestellt ist, bei dem an den axial äußeren Kanten des Gürtels keine freien Festigkeitsträgerenden vorhanden sind, die im Betrieb des Reifens zu einer Gürtelkantenseparation führen könnten. Denn die radial äußere und die radial innere Lage bilden gemeinsam eine Art Schlauch, der sich in Umfangsrichtung des Reifens erstreckt und der einen in etwa rechteckigen Querschnitt mit gerundeten Ecken aufweist und der die mittige(n) Gürtellage(n) zwischen sich einschließt. Die schlauchartige radial äußere und radial innere Gürtellage ist durch eine spiralförmige, in Umfangsrichtung mit einem Winkel größer als 10° zur Umfangsrichtung orientierten Umwicklung der mittigen Gürtellage(n) durch ein oder mehrere endlose gummierte, festigkeitsträgerenthaltende Bänder entstanden.

Vorteilhaft ist es, wenn die Festigkeitsträger der radial äußeren und der radial inneren Lage organische oder textile Festigkeitsträger sind. Hierunter sind insbesondere Aramid und/oder textile Festigkeitsträgermaterialien mit einem Modul größer als 30 GPa zu verstehen.

In einer Ausführungsform weist der Fahrzeugluftreifen einen drei-lagigen Gürtel auf, wobei eine einzige mittige Gürtellage angeordnet ist, deren Festigkeitsträger etwa in 0°-Richtung orientiert sind. Somit ist ein alternativer Fahrzeugreifen mit einem dreilagigen Gürtel, insbesondere für LKW-Reifen geschaffen, bei dem die Festigkeitsträger der mittigen Lage in Reifenumfangsrichtung oder unter einem sehr kleinen Winkel, jedenfalls kleiner als 5°, zur Reifenumfangsrichtung verlaufen. Diese 0°-Lage im Gürtelverband von LKW-Reifen versteift bzw. versteifen den Reifen in Umfangsrichtung und haben günstige Auswirkungen auf das Abriebs- und Fahrverhalten des Reifens.

In einer anderen Ausführungsform eines Fahrzeugluftreifens weist der Gürtel zwei mittige Lagen auf, welche zwischen der radial äußeren und der radial inneren Lage angeordnet sind, wobei jede mittige Lage parallel zueinander angeordnete Festigkeitsträger aufweist und wobei die Festigkeitsträger jeder Lagen einander aufgrund gegenläufiger Steigungen in Bezug auf die Umfangsrichtung kreuzen. Es ist ein vier-lagiger Gürtel geschaffen, dessen beiden äußeren Lagen die beiden inneren Lagen schlauchartig umhüllen, so dass an den axial äußeren Gürtelkanten keine freien Festigkeitsträgerenden vorhanden sind. Die Gefahr einer Gürtelkantenseparation ist vermindert.

Weitere Merkmale, Vorteile und Einzelheiten der Erfindung werden anhand der Zeichnungen, die schematische Ausführungsbeispiele darstellen, näher erläutert. Es zeigen die:
- Fig.1a: einen dreilagigen Gürtel, dessen radial äußere und radial innere Lage gemeinsam eine schlauchartige Umhüllung der mittigen Lage bilden;
- Fig.1b: einen Querschnitt durch den dreilagigen Gürtelverband der Figur 1a;
- Fig.2a: einen vierlagigen Gürtelverband, dessen radial äußere und radial innere Lage gemeinsam eine schlauchartige Umhüllung der beiden mittigen Lagen bilden;
- Fig.2b: einen Querschnitt durch den vierlagigen Gürtel der Figur 2a.

Jede Gürtellage der nachfolgend näher beschriebenen Gürtelverbände besteht aus in eine Gummischicht eingebetteten Festigkeitsträgern, vorzugsweise aus Stahlkord oder einem anderen Material hoher Steifigkeit und Festigkeit, beispielsweise Aramid. Die Stahlkorde verlaufen in jeder Gürtellage parallel zueinander, unter den für Gürtellagen von LKW-Reifen üblichen gegenseitigen Abständen und sind aus mindestens 4 Teilsträngen (Filamenten) mit Durchmessern zwischen 0,15 mm und 0,40 mm aufgebaut.

Unter 0°-Lage ist eine Gürtellage zu verstehen, welche in Umfangsrichtung bzw. nahezu in Umfangsrichtung verlaufende Stahlkorde enthält. Benachbarte Gürtellagen sind dann als gleichsteigend bezeichnet, wenn die Stahlkorde, die sie enthalten, eine übereinstimmende Neigungsrichtung zur Umfangsrichtung aufweisen, wobei die Winkel, die sie mit der Umfangsrichtung einschließen, gleich groß oder unterschiedlich groß sein können. Als kreuzend, gekreuzt oder gegenläufig steigend sind Stahlkorde in benachbarten Gürtellagen dann bezeichnet, wenn in der einen Lage die Stahlkorde zur Umfangsrichtung in der einen Richtung geneigt verlaufen und die Stahlkorde in der anderen Lage zur Umfangsrichtung eine Neigung in die andere Richtung aufweisen.

Des Weiteren wird in der nachfolgenden Beschreibung jeweils eine Aufeinanderfolge der Gürtellagen beschrieben, bei der die der Radialkarkasse unmittelbar benachbarte Lage als radial innere oder erste Gürtellage bezeichnet wird. An diese Gürtellagen schließen in Richtung Laufstreifen die weiteren Gürtellagen an, die beispielsweise als zweite, dritte und vierte Gürtellage bezeichnet sind. Die höchstnummerierte Gürtellage ist die radial äußere Gürtellage.

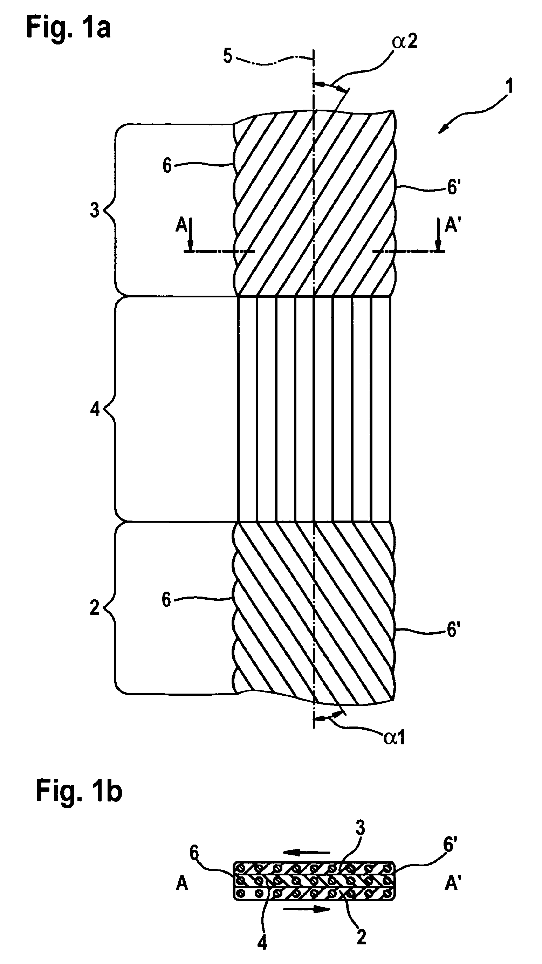

In der **Figur 1a** ist ein aus drei Lagen 2,3,4 bestehender Gürtel 1 dargestellt, dessen radial innere 2 und radial äußere 3 Lage gemeinsam eine schlauchartige, in Umfangsrichtung verlaufende Umhüllung der mittigen Lage 4 bilden. Der Gürtel 1 ist in einer lagenabgedeckten Form dargestellt, was bedeutet, dass im unteren Bereich der Figur die Gürtellage 2 ohne die aufliegenden Lagen 3 und 4 dargestellt ist. Im mittigen Bereich der Figur1 ist die mittige Gürtellage 4 ohne die aufliegende Lage 3 dargestellt, während im oberen Bereich der Figur die radial äußere Gürtellage 3 dargestellt ist. Der gezeigte Gürtelverband 1 weist drei Gürtellagen 2, 3 und 4 auf. Die erste Gürtellage 2 enthält Stahlkorde, die unter einem Winkel α1 zwischen 10° und 30° zur Umfangsrichtung 5 geneigt verlaufen, die zweite Gürtellage 3 enthält eine 0°-Stahlkordlage 4. Die radial äußerste Lage 3 ist eine Lage, deren Stahlkorde unter einem Winkel α2 zwischen 10° und 30° zur Umfangsrichtung, kreuzend zur radial inneren Festigkeitsträgerlage2, orientiert sind. Anstelle der einen 0°-Lage 4 können auch zwei 0°-Lagen vorgesehen sein. Die Gürtellagen 2 und 3 bilden eine schlauchartige Umhüllung der geringfügig schmaleren 0°-Lage 4. Denn die Gürtellagen 3, 4 bestehen aus spiralförmig um die mittige Lage 4 in Umfangsrichtung gewickelten gummierten Festigkeitsträgerstreifen, so dass die mittige Lage 4 von den Lagen 2,3 schlauchartig umhüllt ist. An den axial äußeren Kanten des Gürtels befinden sich daher keine freien Festigkeitsträgerenden. Somit ist die Gefahr einer Gürtelkantenseparation vermieden bzw. verringert.

In der **Figur 1b** ist ein Querschnitt des Gürtels der Fig.1a dargestellt. Die schlauchartige, im Querschnitt quasi rechteckige Umhüllung der radial inneren und der radial äußeren Lagen 2, 3, deren Ecken gerundet sind, hüllt die mittige Lage 4 ein. An den axial äußeren Kanten 6, 6' des Gürtels sind keine freien Festigkeitsträgerenden.

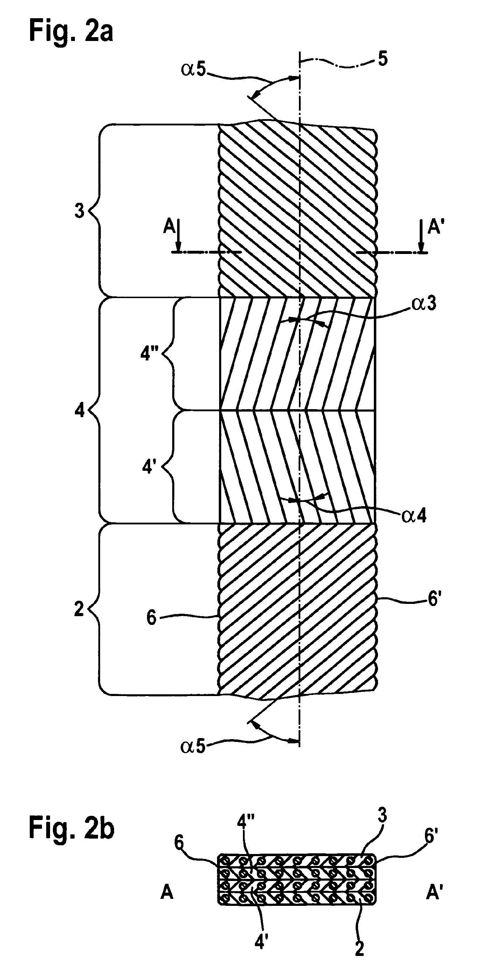

Die **Figur 2a** zeigt einen vierlagigen Gürtelverband 1. Der Gürtel der Figur 2a unterscheidet sich von dem Gürtel der Figur 1 nur darin, dass zwei mittige Lagen 4', 4'' angeordnet sind, wobei die Festigkeitsträger der beiden mittigen Lagen den gleichen Winkel α3, α4 zwischen 10° bis 30° mit der Umfangsrichtung einschließen und kreuzend zueinander angeordnet sind. In der abgedeckten Darstellung ist zu erkennen, dass je zwei aufeinanderfolgende Lagen kreuzende Festigkeitsträgerorientierungen aufweisen. Die Festigkeitsträger der Lagen 2, 3 schließen den gleichen Winkel α5 mit der Umfangsrichtung ein, wobei der Winkel ein Winkel zwischen 10° bis 70° sein kann.

In der **Figur 2b** ist ein Querschnitt des Gürtels der Fig.2a dargestellt. Die schlauchartige, im Querschnitt quasi rechteckige Umhüllung der radial inneren und der radial äußeren Lagen 2, 3, deren Ecken gerundet sind, hüllt die mittigen Lagen 4', 4'' ein. An den axial äußeren Kanten 6, 6' des Gürtels sind keine freien Festigkeitsträgerenden.

### Bezugszeichenliste

### (Teil der Beschreibung)

- 1: Gürtel(verband)
- 2: Radial innere Gürtellage
- 3: Radial äußere Gürtellage
- 4: Innere Gürtellage
- 5: Umfangsrichtung
- 6: Axial äußere Gürtelkante

## Patentansprüche

1. Fahrzeugluftreifen in Radialbauart, insbesondere für Schwerlastfahrzeuge, mit einem mindestens dreilagigen Gürtelverband (1), welcher gummierte Festigkeitsträger aus Stahlkord oder einem Material vergleichbar hoher Steifigkeit und Festigkeit enthält und zumindest eine radial äußere (3) und eine radial innere (2) Gürtellage mit wenigstens einer zwischen diesen beiden Lagen angeordneten weiteren Lage (4) aufweist, wobei die Festigkeitsträger der radial äußeren (3) und der radial inneren (2) Lage in jeder Lage parallel zueinander angeordnet sind und einen Winkel von mindestens 10° mit der Reifenumfangsrichtung (5) einschließen und wobei die Festigkeitsträger der radial äußeren (3) Lage und der radial inneren (2) Lage eine gegenläufige Steigung aufweisen, wobei die radial äußere (3) und die radial innere (2) Lage aus einem oder mehreren gummierten Streifen spiralförmig um die mittige(n) Lage(n) (4) herum in Umfangsrichtung (5) gewickelt ist, so dass die radial äußere (3) und die radial innere (2) Lage keine axial äußeren freien Festigkeitsträgerkanten aufweisen und die mittige(n) Lage(n) umhüllen
**dadurch gekennzeichnet, dass**
der Steigungswinkel (α) der radial äußeren (3) und der radial inneren (2) Lage ungleich groß ist.

2. Fahrzeugluftreifen nach Anspruch 1,
**dadurch gekennzeichnet, dass** die Festigkeitsträger der radial äußeren und der radial inneren Lage organische oder textile Festigkeitsträger, insbesondere Aramid sind.

3. Fahrzeugluftreifen nach einem oder mehreren der vorangehenden Ansprüche,
**dadurch gekennzeichnet, dass** eine einzige mittige Lage (4) angeordnet ist, deren Festigkeitsträger etwa in 0°-Richtung angeordnet sind.

4. Fahrzeugluftreifen nach einem oder mehreren der vorangehenden Ansprüche 1-3, **dadurch gekennzeichnet, dass** zwei mittige Lagen (4, 4') zwischen der radial äußeren (3) und der radial inneren (2) Lage angeordnet sind, wobei jede mittige Lage (4) parallel zueinander angeordnete Festigkeitsträger aufweist und wobei die Festigkeitsträger jeder Lagen (2,3,4) einander aufgrund gegenläufiger Steigungen (α) kreuzen.

## Claims

1. Pneumatic vehicle tyre of a radial type of construction, in particular for heavy trucks, with an at least three-ply breaker belt assembly (1), which contains rubberized reinforcing elements of steel cord or a material of comparably high stiffness and strength and at least one radially outer belt ply (3) and one radially inner belt ply (2), with at least one further ply (4) arranged between these two plies, the reinforcing elements of the radially outer ply (3) and of the radially inner ply (2) being arranged parallel to one another in each ply and forming an angle with the circumferential direction (5) of the tyre of at least 10°, and the reinforcing elements of the radially outer ply (3) and of the radially inner ply (2) having an opposing pitch, the radially outer ply (3) and the radially inner ply (2) being wound from one or more rubberized strips spirally around the middle ply/plies (4) in the circumferential direction (5), so that the radially outer ply (3) and the radially inner ply (2) do not have any axially outer free reinforcing-element edges and envelop the middle ply/plies, **characterized in that** the angle of pitch (α) of the radially outer ply (3) and of the radially inner ply (2) is unequal.

2. Pneumatic vehicle tyre according to Claim 1, **characterized in that** the reinforcing elements of the radially outer ply and of the radially inner ply are organic or textile reinforcing elements, in particular aramid.

3. Pneumatic vehicle tyre according to one or more of the preceding claims, **characterized in that** a single middle ply (4) is arranged, the reinforcing elements of which are arranged approximately in the direction of 0°.

4. Pneumatic vehicle tyre according to one or more of the preceding Claims 1-3, **characterized in that** two middle plies (4, 4') are arranged between the radially outer ply (3) and the radially inner ply (2), each middle ply (4) having reinforcing elements arranged parallel to one another and the reinforcing elements of each ply (2, 3, 4) crossing one another as a result of opposing pitches (α).

## Revendications

1. Pneu de véhicule de construction radiale, en particulier pour véhicules poids lourds, comprenant un bandage de ceinture (1) à au moins trois couches, qui contient des renforts caoutchoutés en câble d'acier ou en un matériau de haute rigidité et tenue comparable et qui présente au moins une couche de ceinture radialement extérieure (3) et une couche de ceinture radialement intérieure (2) avec au moins une couche supplémentaire (4) disposée entre ces deux couches, les renforts de la couche radialement extérieure (3) et de la couche radialement intérieure (2) étant disposés dans chaque couche parallèlement les uns aux autres et formant un angle d'au moins 10° avec la direction périphérique du pneu (5), et les renforts de la couche radialement extérieure (3) et de la couche radialement intérieure (2) présentant une pente opposée, la couche radialement extérieure (3) et la couche radialement intérieure (2) étant enroulées en spirale à partir d'un ou plusieurs rubans caoutchoutés et la ou les couches centrales (4) étant enroulées tout autour dans la direction périphérique (5), de telle sorte que la couche radialement extérieure (3) et la couche radialement intérieure (2) ne présentent aucune arête de renfort libre axialement extérieure et enveloppent la ou les couches centrales,
**caractérisé en ce que**
les angles de pente (α) de la couche radialement extérieure (3) et de la couche radialement intérieure (2) sont différents.

2. Pneu de véhicule selon la revendication 1, **caractérisé en ce que** les renforts de la couche radialement extérieure et de la couche radialement intérieure sont des renforts organiques ou textiles, notamment en aramide.

3. Pneu de véhicule selon l'une quelconque ou plusieurs des revendications précédentes, **caractérisé en ce qu'**une couche centrale unique (4) est prévue, dont les renforts sont disposés approximativement dans la direction 0°.

4. Pneu de véhicule selon l'une quelconque ou plusieurs des revendications précédentes 1 à 3, **caractérisé en ce que** deux couches centrales (4, 4') sont disposées entre la couche radialement extérieure (3) et la couche radialement intérieure (2), chaque couche centrale (4) présentant des renforts disposés parallèlement les uns aux autres et les renforts de chaque couche (2, 3, 4) se croisant les uns les autres suivant des pentes opposées (α).
